# EUROPEAN PATENT SPECIFICATION

(11) **EP 3 305 145 B1**
(45) Date of publication and mention of the grant of the patent: **12.06.2019**
(21) Application number: 17194579.3
(22) Date of filing: 03.10.2017
(51) Int. Cl.: A47J 31/44

(54) **EMULSIFYING PUMP**
EMULGIERPUMPE
POMPE À ÉMULSION

(30) Priority: 04.10.2016 IT 201600099445
(43) Date of publication of application: 11.04.2018
(73) Proprietor: Fluid-O-Tech S.r.l., 20094 Corsico (MI) (IT)
(72) Inventor: ANDREIS, Diego, 20145 MILANO (IT); COPELLI, Stefano, 20032 CORMANO (MI) (IT)
(74) Representative: Frasson, Luca

(56) References cited:
- EP-A1- 0 485 350
- WO-A1-2015/197509
- DE-U1-202009 011 184

## Description

The present invention refers to an emulsifying pump, as well as to a method for heating and frothing milk by means of such an emulsifying pump.

In the field of coffee-making, Italian and worldwide, milk represents a strategic beverage. Whilst in Italy milk carries out a significant role generally limited to breakfast (cappuccino, espresso macchiato and the like), abroad it is used to prepare many other drinks that are also served after the main meals.

Milk is often served "frothed" to make a two-phase end product consisting of a creamy part and of a liquid part that cannot be immediately been separated from one another. A typical example in which it is required to froth milk is that of the preparation of cappuccino. Cappuccino is indeed defined as a hot drink consisting of a dose of espresso coffee (weighing about 23 g) to which a dose of frothed hot milk is added. This mixture constitutes a final drink weighing about 110-120 g.

Normally, the milk "frothing" operation is carried out by hand, directly by the barista, by using a steam wand. This operation requires a certain amount of care. Indeed, protein serums, which are present in milk, are surface-active but thermo-labile compounds. Surface activity, decreasing the surface tension of the fluid and therefore its surface rigidity, promotes the frothing of milk if air is introduced. Thermolability, on the other hand, determines the existence of a limit temperature, which in this specific case is about 70°C, at which proteins deteriorate and lose their surface-active behaviour. This deterioration process is an irreversible process: by cooling the milk the proteins no longer retain their functional characteristic of surface activity.

The presence of the aforementioned limit temperature is well-known to the more experienced workers in the sector. Vice-versa, those with little experience, when they encounter difficulties in obtaining the frothing of the milk, normally continue to use the steam wand in attempting to obtain the desired frothing. By doing so, the milk heats up beyond the limit temperature and is often brought to boiling. The increased temperature and the breaking down of much of the protein material lead, on the one hand, to an increase in surface tension and, on the other hand, to the milk boiling, which leads to the formation of a foam consisting of very large bubbles that tend to burst very quickly.

In order to avoid these situations, not improbable in the technical sector of the preparation of hot drinks, different solutions have been introduced that tend to automate the frothing process, with or without the help of an operator. For example, documents EP 1 501 398 B1 and EP 1 776 905 B1 describe respective improved steam wands in which both air, coming from a compressor, and steam, coming from a boiler, are introduced. This solution, despite solving the problem of manual frothing avoiding overheating of the milk, cannot be applied in those specific situations in which it is required to froth a well-defined dose of milk. A typical case is that of apparatuses for dispensing drinks operating in self-service mode, typically common in the hotel trade.

In order to tackle the aforementioned specific situations different solutions have been developed. For example, document EP 0 243 326 B1 describes a device for frothing milk through the use of the Venturi effect. This device, although solving the problem of the predetermined dose of milk to be frothed, in particular working conditions sometimes has instabilities due to the reaching of temperatures that can cause the milk to boil and the sucked air to expand, determining a slowing down of the flow with consequent reduction of the dose in the cup.

Good stability has been obtained with the application of a pump, as described in document EP 1 785 074 B1. Thanks to the pump the milk is forcibly pushed, forcing the apparatus to always dispense the same dose.

In apparatuses with dosed frothing like those described above, the frothing of milk takes place by means of the air that, in some cases, is mixed with milk at the same time as the steam and, in other cases, introduced in the flow of milk already heated by the steam that comes from the boiler. Due to the quality of the frothing of the milk it may thus be advantageous to froth an amount of milk "from cold", then heating the product obtained up to its optimal temperature, which for Italian cappuccino is around 65°C.

A cold frothing and subsequent heating process has been known for some time and is described, for example, in document EP 0 485 350 A1. More recently, this process has also been illustrated in documents EP 1 593 330 B1 and EP 2 120 656 B1. In this context a specific amount of milk, taken from a refrigerating unit, is sucked and mixed by a pump with a certain amount of air. The pump is preferably a gear pump and it takes care of finely mixing the two fluids, so as to obtain a high-density milk foam, and of sending the frothed milk to the cup. In the case of a cold drink, the sending to the cup takes place directly, or through a further cooling element. In the case of a hot drink, the sending to the cup takes place through a heating device.

For the preparation of a hot drink, in the quoted examples, the frothed milk is heated by means of a heat exchanger. The use of the heat exchanger, however, has some drawbacks. Since the heat exchangers of the type described in documents EP 0 485 350 A1 and EP 1 593 330 B1 are necessarily equipped with a significant mass, the preparation of a cold drink immediately after the preparation of a hot drink cannot be done with the correct temperature. Indeed, the heat exchanger, not yet cooled, gives up heat to the milk with which it comes into contact. It is therefore necessary to wait for the heat exchanger to cool down, or to force rapid cooling thereof, or else to deviate the flow of milk avoiding the heat exchanger, but remarkably complicating the circuit and thus compromising the characteristics of hygiene and washability.

As mentioned previously, it is possible to use steam as the heating means of the milk by exploiting the latent condensation heat. However, although this solution has proven energy efficient, it involves the introduction in the apparatus of a small boiler or of a steam generator, increasing the complexity of the apparatus itself.

In the technical field of the preparation of drinks it is known to use screw pumps, like for example the one illustrated in document EP 2 160 965 B1. However, this screw pump, which in particular is an eccentric screw pump for liquids applicable to a coffee machine, has numerous drawbacks in the case of use with frothed milk. Indeed, with the eccentric screw it is not possible to have the "texturization" effect that is obtained using two or more screws. Moreover, the stator for a single eccentric screw normally has the body made with an elastomeric material that, in general, in contact with milk, results in different problems of hygiene and reliability.

Document WO 2015/197509 A1 illustrates an emulsifying pump comprising a heating element arranged to heat the milk once frothed. The emulsifying pump is of the gear type and the path of fluid inside such a pump is very complex and tortuous.

In conclusion, all of the technical solutions described in the documents quoted earlier result in complexity of the respective fluid circuits, each consisting of numerous components physically and operatively interconnected with one another. This increases the complexity of management of the different technical solutions, especially in relation to hygiene, which is inevitably compromised by the different "dead volumes" that are created between the various connections of the components and inside the components themselves.

The purpose of the present invention is therefore to make an emulsifying pump, as well as a method for heating and frothing milk by means of such an emulsifying pump, which are capable of overcoming the aforementioned drawbacks of the prior art in an extremely simple, cost-effective and particularly rational and functional manner.

In detail, a purpose of the present invention is to make an emulsifying pump that, without the help of further components, is capable of carrying out all of the operations necessary for the preparation of both hot and cold frothed milk.

Another purpose of the present invention is to make an emulsifying pump that is capable of ensuring a high quality standard of the drink, obtained thanks to the particular design of the pump that carries out a progressive and controlled homogenization and texturization effect of the frothed milk.

Another purpose of the present invention is to make an emulsifying pump that is capable of ensuring a high hygiene standard, thanks to the reduction of all of the "dead volumes" inside the pump, as well as of minimizing the amounts of water and liquid detergent for the washing and rinsing operations.

Another purpose of the present invention is to make an emulsifying pump that makes it possible to obtain, in an automatic and selectable manner, hot milk at different desired temperatures through the use of a heater integral with the main body of the pump.

A further purpose of the present invention is to make an emulsifying pump that makes it possible to vary the amount of emulsion of the frothed milk by intervening on the speed of the pump.

Yet another purpose of the present invention is to make an emulsifying pump that is capable of dosing the amount of milk to be dispensed, since, by equipping the electric motor of the pump with a suitable sensor that quantifies the number of revolutions carried out (such as a Hall sensor), it is possible to obtain a precise control of the dose. This is thanks to the type of the pump itself, which is particularly recommended as dosing pump.

These purposes according to the present invention are accomplished by making an emulsifying pump, as well as a method for heating and frothing milk by means of such an emulsifying pump, as outlined in the independent claims.

Further characteristics of the invention are highlighted by the dependent claims, which are an integral part of the present description.

The characteristics and advantages of an emulsifying pump according to the present invention will become clearer from the following description, given as an example and not for limiting purposes, referring to the attached schematic drawings, in which:

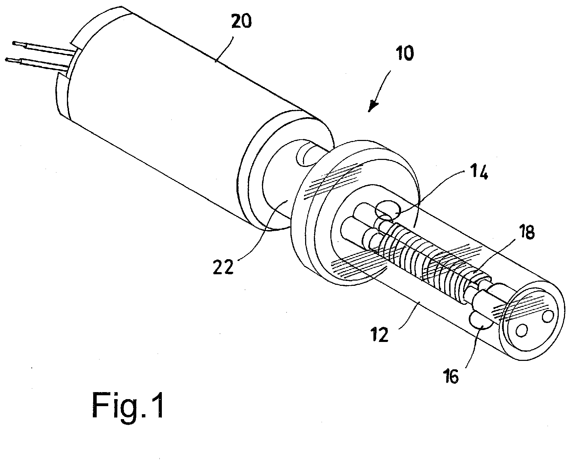

figure 1 is a partially transparent perspective view of a preferred embodiment of the emulsifying pump according to the present invention; and
figure 2 is a longitudinal section view of the emulsifying pump of figure 1.

With reference to the figures, a preferred embodiment of the emulsifying pump according to the present invention is shown, wholly indicated with reference numeral 10. The emulsifying pump 10 comprises a fluidic body 12 on which at least one suction mouth 14 for a fluid to be pumped and at least one delivery mouth 16 for the pumped fluid are obtained.

Inside the fluidic body 12, between the suction mouth 14 and the delivery mouth 16, a pumping unit 18 of the rotary volumetric type is housed. The pumping unit 18 is provided with two or more rotating bodies with helical profile, arranged to treat the fluid in the spaces left free among such rotating bodies and to send the fluid, in one or more separate chambers and with a flow parallel to the axis of the rotating bodies, towards the delivery mouth 16.

In particular, the rotating bodies of the pumping unit 18 consist of two or more worm screws with opposing coils, set in rotation along axes parallel to one another. The pumping unit 18 can also be made with other mode of construction, like for example with generic rotating bodies provided with conjugated profiles, like helical lobes or opposite screws.

In normal operating conditions of the emulsifying pump 10, the fluid to be pumped enters in the fluidic body 12 from the suction mouth 14 and is divided into two different flows. Thereafter, such a fluid is sucked by the worm screws of the pumping unit 18 and is pushed axially towards the delivery mouth 16. The worm screws of the pumping unit 18 are operatively connected to a motor 20, typically consisting of an electric motor, by means of the interposition of a motion transmission coupling 22.

In the case in which the fluid to be pumped consists of a milk/air mixture, the emulsifying pump 10 of the rotary volumetric type with two or more screws has proven particularly effective in obtaining the right quality of the frothed milk. This emulsifying pump 10, indeed, is capable of sucking the right amount of milk and the relative amount of air from the suction mouth 14. The milk/air mixture is pushed towards the delivery mouth 16 through the worm screws of the pumping unit 18. The progressive movement of the milk/air mixture through the worm screws of the pumping unit 18 results in a high degree of homogenization and texturization of the frothed milk.

The fluidic body 12 of the emulsifying pump 10 can also be provided with two separate suction mouths 14, both arranged in the suction stage of such a fluidic body 12. In this configuration a first suction mouth 14 is arranged exclusively for the entry of milk in the fluidic body 12, whereas the second suction mouth 14 is arranged exclusively for the entry of air in such a fluidic body 12. In this way, joining points, typically Y or T-shaped, are avoided in the suction duct arranged between the suction mouth 14 and the pumping unit 18.

The fluidic body 12 is preferably manufactured from a metal material and is provided with at least one electrically powered heating device 24. The heating device 24 is arranged to heat the fluid processed by the emulsifying pump 10 in such a manner that the pumped fluid, exiting from the delivery mouth 16, has a higher temperature than the temperature of the fluid to be pumped, entering in the suction mouth 14.

The heating device 24 can be both buried in the metal material of which the fluidic body 12 is made, and made integral with the outside of such a fluidic body 12. The heating device 24 can consist of elements of a different type, like for example one or more heater plugs, one or more induction heaters with coil or one or more thick film heaters.

Irrespective of the embodiment, the heating device 24, suitably powered, makes it possible to obtain hot milk at the desired temperature exiting from the emulsifying pump 10. Indeed, at the moment when the milk is pushed inside the fluidic body 12 by the worm screws of the pumping unit 18, it increases in temperature by means of the heat conduction between the fluid and the metal fluidic body 12.

In another embodiment, the heating device 24 could be integral with the worm screws of the pumping unit 18, since such worm screws are also preferably manufactured from a metal material. In this specific embodiment, the fluidic body 12 could be manufactured from a polymeric material instead of metal.

In a further embodiment, the fluidic body 12 and/or the worm screws of the pumping unit 18 could be manufactured from a thermally or electrically conductive plastic material. This material could also exploit nanotechnologies, for example using Carbon NanoTubes (CNT). In yet another embodiment, the fluidic body 12 and/or the worm screws of the pumping unit 18 could be manufactured from a ceramic material. Finally, the fluidic body 12 and/or the worm screws of the pumping unit 18 could be manufactured from any material compatible with heating by microwaves or induction.

The final temperature of the milk exiting from the delivery mouth 16 of the emulsifying pump 10, therefore, will depend on the temperature of the fluidic body 12, when made of metal material, or on the temperature of the worm screws of the pumping unit 18. The desired temperature value can be selected electronically. Indeed, the emulsifying pump 10 can be equipped with an electronic control device (not shown), configured to activate and deactivate the heating device 24, as well as with at least one temperature probe 26, operatively connected to such an electronic control device and arranged to carry out a control on the temperature selected by means of such an electronic control device.

Of course, in the case in which it is wished to obtain only emulsified cold milk exiting from the emulsifying pump 10, it would be sufficient not to activate the heating device 24. The choice of suitable metal materials, as well as the study of the masses that constitute the fluidic body 12, can minimise the heat capacity of the emulsifying pump 10 in order to be able to flexibly obtain consecutive dispensing both of hot milk and of cold milk.

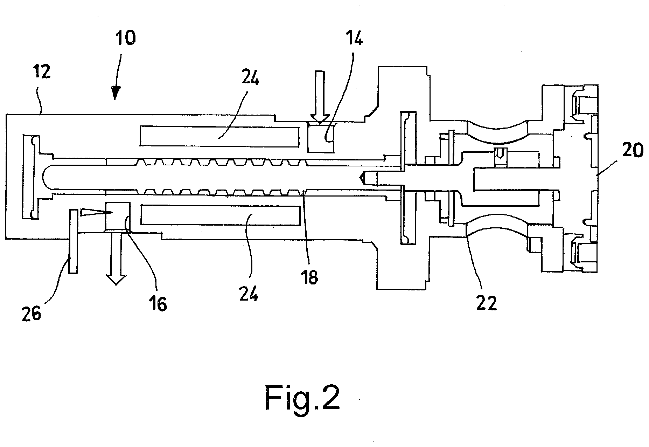

Another possibility for varying the temperature of the fluid (milk) processed by the emulsifying pump 10 can consist of varying the rotation speed of the worm screws of the pumping unit 18, thus varying the flow of the fluid. In this way both the relative contact time, and the relative amount of heat exchanged between the fluid and the heating device 24 vary. The temperature probe 26 can be suitably positioned also so as to directly adjust the temperature of the fluid through the delivery mouth 16. In other words, the temperature probe 26 can be suitably positioned at the delivery mouth 16, as shown in figure 2.

The variation of the rotation speed of the worm screws of the pumping unit 18 also results in a different amount of air that is sucked through the suction mouth 14. Consequently, it is possible to electronically vary the amount of emulsion of the frothed milk. In practice, having the value of the variation of the rotation speed of the worm screws of the pumping unit 18 and the value of the temperature of the heating device 24 available, it is possible to have the maximum flexibility of programming and of result both on the temperature, and on the emulsion of the dispensed milk.

Moreover, at the end of the dispensing of milk it is also possible, as final washing, to inject water through the suction mouth 14. The water, suitably heated by the heating device 24, can sanitise the fluidic body 12 of the emulsifying pump 10. The sanitising effect can also be potentially increased by vaporising the water itself. From the attached figures it can be seen how the emulsifying pump 10 does not have particular "dead volumes", just as the space in contact with the fluid is particularly small. This greatly limits the amount of water necessary for sanitization.

The emulsifying pump 10 of the rotary volumetric type with two or more screws has thus proven to be particularly suitable for the preparation of both hot and cold frothed milk since, by shape effects, it creates a natural homogenization of the milk/air mixture. The emulsifying pump 10 of the rotary volumetric type with two or more screws also has a high trigger capacity, which makes it possible to easily suck the fluid even in the presence of a lot of entering air. Moreover, it is well-known that screw pumps are among the most reliable ones precisely when it is necessary to pressurise particularly dense liquids, or with the presence of solid parts in suspension. This is an advantage precisely in the case of milk.

Finally, screw pumps, being with progressive cavity, are dosing pumps by definition, thus through the counting of the number of revolutions of the motor it is also possible to dose the amount of fluid to be dispensed with high precision. The emulsifying pump 10 of the rotary volumetric type with two or more screws is reversible, thus it is possible to suck the fluid also from the delivery mouth 16 and convey it towards the suction mouth 14. This can be advantageous especially in the case in which all milk residues must be removed from the circuits downstream of the emulsifying pump 10, taking such milk residues towards the respective feeding container, which is typically kept in controlled temperature conditions.

It has thus been seen that the emulsifying pump according to the present invention achieves the purposes outlined earlier.

The emulsifying pump of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Emulsifying pump (10) comprising:
- a fluidic body (12) on which at least one suction mouth (14) for a fluid to be pumped and at least one delivery mouth (16) for the pumped fluid are obtained;
- a pumping unit (18) housed inside the fluidic body (12) between the suction mouth (14) and the delivery mouth (16), said pumping unit (18) being of the rotary volumetric type and being provided with two or more rotating bodies with helical profile, arranged to treat the fluid in the spaces left free among said rotating bodies and to send said fluid, in one or more separate chambers and with a flow parallel to the axis of the rotating bodies, towards the delivery mouth (16); and
- a motor (20) operatively connected to said two or more rotating bodies of the pumping unit (18) by means of the interposition of a motion transmission coupling (22),
wherein the fluidic body (12) of the emulsifying pump (10) is provided with at least one electrically powered heating device (24), said heating device (24) being arranged to heat the fluid processed by the emulsifying pump (10) in such a manner that the pumped fluid, exiting from the delivery mouth (16), has a higher temperature than the temperature of the fluid to be pumped, entering the suction mouth (14).

2. Emulsifying pump (10) according to claim 1, **characterised in that** said two or more rotating bodies of the pumping unit (18) consist of respective worm screws with opposing coils, set in rotation along axes parallel to one another.

3. Emulsifying pump (10) according to claim 1 or 2, **characterised in that** the fluidic body (12) is manufactured from a metal material, and **in that** the heating device (24) is buried in the metal material from which said fluidic body (12) is made.

4. Emulsifying pump (10) according to claim 1 or 2, **characterised in that** the fluidic body (12) is manufactured from a metal material, and **in that** the heating device (24) is made integral with the outside of said fluidic body (12).

5. Emulsifying pump (10) according to any claims 1 to 3, **characterised in that** the heating device (24) is selected from the group consisting of:
- one or more heater plugs;
- one or more induction heaters with coil;
- one or more thick film heating elements.

6. Emulsifying pump (10) according to claim 2, **characterised in that** said two or more worm screws of the pumping unit (18) are manufactured from a metal material, and **in that** the heating device (24) is made integral with said two or more worm screws of the pumping unit (18).

7. Emulsifying pump (10) according to claim 6, **characterised in that** the fluidic body (12) is manufactured from a polymer material.

8. Emulsifying pump (10) according to claim 2, **characterised in that** the fluidic body (12) and/or said two or more worm screws of the pumping unit (18) are manufactured from a thermally or electrically conductive plastic material.

9. Emulsifying pump (10) according to claim 2, **characterised in that** the fluidic body (12) and/or said two or more worm screws of the pumping unit (18) are manufactured from a ceramic material.

10. Emulsifying pump (10) according to claim 2, **characterised in that** the fluidic body (12) and/or said two or more worm screws of the pumping unit (18) are manufactured from any material compatible with heating by microwaves or induction.

11. Emulsifying pump (10) according to any claims 1 to 10, **characterised in that** it comprises an electronic control device configured to activate and deactivate the heating device (24) and to electronically select the temperature desired value of the pumped fluid exiting the delivery mouth (16).

12. Emulsifying pump (10) according to claim 11, **characterised in that** it comprises at least one temperature probe (26), operatively connected to said electronic control device and arranged to carry out a control on the temperature selected by means of said electronic control device.

13. Emulsifying pump (10) according to claim 12, **characterised in that** the temperature probe (26) is positioned at the delivery mouth (16).

14. Emulsifying pump (10) according to any claims 1 to 13, **characterised in that** the fluidic body (12) is provided with two separate suction mouths (14), both placed in the suction stage of said fluidic body (12), a first suction mouth (14) being arranged exclusively for the entrance of a first fluid into the fluidic body (12), whereas the second suction mouth (14) is arranged exclusively for the entrance of a second fluid, different from said first fluid, into the fluidic body (12) .

15. Method for heating and frothing milk by means of an emulsifying pump (10) according to any claims 1 to 14, the method comprising the steps of:
- introducing a mixture consisting of milk and air through said at least one suction mouth (14) of the fluidic body (12); and
- pushing the milk/air mixture towards said at least one delivery mouth (16) of the fluidic body (12) through said two or more rotating bodies of the pumping unit (18), the progressive movement of the milk/air mixture through said two or more rotating bodies of the pumping unit (18) causing homogenization and texturization of the frothed milk;
the method being **characterised in that** it comprises a heating step of the milk/air mixture contained in the fluidic body (12) by means of said at least one heating device (24).

16. Method according to claim 15, further comprising a step of varying the rotation speed of said two or more rotating bodies of the pumping unit (18) in such a manner as to vary the flow of the milk/air mixture, as well as the contact time and the amount of heat exchanged between said milk/air mixture and the heating device (24).

17. Method according to claim 16, further comprising a step of varying the amount of air that is sucked through the suction mouth (14), obtained by means of the variation of the rotation speed of said two or more rotating bodies of the pumping unit (18) in such a manner as to vary the amount of emulsion of frothed milk.

18. Method according to any claims 15 to 17, further comprising a step of selecting and controlling the temperature value of the milk/air mixture contained in the fluidic body (12).

## Patentansprüche

1. Emulgierpumpe (10), umfassend:
- einen Fluidkörper (12), an dem wenigstens eine Saugmündung (14) für ein zu pumpendes Fluid und wenigstens eine Abgabemündung (16) für das gepumpte Fluid erhalten werden;
- eine Pumpeinheit (18), die innerhalb des Fluidkörpers (12) zwischen der Saugmündung (14) und der Abgabemündung (16) untergebracht ist, wobei die Pumpeinheit (18) vom rotierenden volumetrischen Typ ist und mit zwei oder mehr Rotationskörpern mit schraubenförmigem Profil versehen ist, die angeordnet sind, um das Fluid in den Räumen zu behandeln, die zwischen den Rotationskörpern frei gelassen werden, und um das Fluid, in einer oder mehreren getrennten Kammern und mit einer Strömung parallel zur Achse der Rotationskörper, zur Abgabemündung (16) zu senden; und
- einen Motor (20), der mit den zwei oder mehr Rotationskörpern der Pumpeinheit (18) mittels Einlegens einer Bewegungsübertragungskopplung (22) wirkverbunden ist,
wobei
der Fluidkörper (12) der Emulgierpumpe (10) mit mindestens einer elektrisch angetriebenen Erhitzervorrichtung (24) versehen ist, wobei die Erhitzervorrichtung (24) angeordnet ist, um das durch die Emulgierpumpe (10) verarbeitete Fluid derart zu erhitzen, dass das gepumpte Fluid, das aus der Abgabemündung (16) austritt, eine höhere Temperatur aufweist als die Temperatur des zu pumpenden Fluids, das in die Saugmündung (14) eintritt.

2. Emulgierpumpe (10) nach Anspruch 1, **dadurch gekennzeichnet, dass** die zwei oder mehr Rotationskörper der Pumpeinheit (18) aus entsprechenden Schnecken mit gegenüberliegenden Spulen bestehen, die entlang zueinander paralleler Achsen in Rotation versetzt werden.

3. Emulgierpumpe (10) nach Anspruch 1 oder 2, **dadurch gekennzeichnet, dass** der Fluidkörper (12) aus einem Metallmaterial hergestellt ist, und dadurch, dass die Erhitzervorrichtung (24) in dem Metallmaterial, aus dem der Fluidkörper (12) hergestellt ist, vergraben ist.

4. Emulgierpumpe (10) nach Anspruch 1 oder 2, **dadurch gekennzeichnet, dass** der Fluidkörper (12) aus einem Metallmaterial hergestellt ist, und dadurch, dass die Erhitzervorrichtung (24) einstückig mit dem Äußeren des Fluidkörpers (12) hergestellt ist.

5. Emulgierpumpe (10) nach einem der Ansprüche 1 bis 3, **dadurch gekennzeichnet, dass** die Erhitzervorrichtung (24) ausgewählt ist aus der Gruppe bestehend aus:
- einer oder mehreren Glühkerzen;
- einem oder mehreren Induktionserhitzern mit Spule;
- einem oder mehreren Dickschicht-Heizelementen.

6. Emulgierpumpe (10) nach Anspruch 2, **dadurch gekennzeichnet, dass** zwei oder mehr Schnecken der Pumpeinheit (18) aus einem Metallmaterial hergestellt sind und dass die Erhitzervorrichtung (24) einstückig mit den zwei oder mehr Schnecken der Pumpeinheit (18) ausgebildet ist.

7. Emulgierpumpe (10) nach Anspruch 6, **dadurch gekennzeichnet, dass** der Fluidkörper (12) aus einem Polymermaterial hergestellt ist.

8. Emulgierpumpe (10) nach Anspruch 2, **dadurch gekennzeichnet, dass** der Fluidkörper (12) und/oder die zwei oder mehr Schnecken der Pumpeinheit (18) aus einem wärme- oder elektrisch leitfähigen Kunststoffmaterial hergestellt sind.

9. Emulgierpumpe (10) nach Anspruch 2, **dadurch gekennzeichnet, dass** der Fluidkörper (12) und/oder die zwei oder mehr Schnecken der Pumpeinheit (18) aus einem Keramikmaterial hergestellt sind.

10. Emulgierpumpe (10) nach Anspruch 2, **dadurch gekennzeichnet, dass** der Fluidkörper (12) und/oder die zwei oder mehr Schnecken der Pumpeinheit (18) aus irgendeinem Material hergestellt sind, das mit der Erhitzung durch Mikrowellen oder Induktion verträglich ist.

11. Emulgierpumpe (10) nach einem der Ansprüche 1 bis 10, **dadurch gekennzeichnet, dass** sie eine elektronische Regelungsvorrichtung umfasst, die ausgebildet ist, um die Erhitzervorrichtung (24) zu aktivieren und zu deaktivieren und um den gewünschten Temperaturwert des gepumpten Fluids, das aus der Abgabemündung (16) austritt, elektronisch auszuwählen.

12. Emulgierpumpe (10) nach Anspruch 11, **dadurch gekennzeichnet, dass** sie mindestens einen Temperaturfühler (26) umfasst, der mit der elektronischen Regelungsvorrichtung wirkverbunden ist und angeordnet ist, um eine Regelung auf der mittels der elektronischen Regelungsvorrichtung ausgewählten Temperatur durchzuführen.

13. Emulgierpumpe (10) nach Anspruch 12, **dadurch gekennzeichnet, dass** der Temperaturfühler (26) an der Abgabeöffnung (16) positioniert ist.

14. Emulgierpumpe (10) nach Anspruch 1 bis 13, **dadurch gekennzeichnet, dass** der Fluidkörper (12) mit zwei getrennten Saugmündungen (14) versehen ist, die beide in der Saugstufe des Fluidkörpers (12) platziert sind, wobei eine erste Saugmündung (14) ausschließlich für den Eintritt eines ersten Fluids in den Fluidkörper (12) angeordnet ist, während die zweite Saugmündung (14) ausschließlich für den Eintritt eines zweiten Fluids, das sich von dem ersten Fluid unterscheidet, in den Fluidkörper (12) angeordnet ist.

15. Verfahren zum Erhitzen und Aufschäumen von Milch mittels einer Emulgierpumpe (10) nach einem der Ansprüche 1 bis 14, wobei das Verfahren die folgenden Schritte umfasst:
- Einführen eines Gemischs, das aus Milch und Luft besteht, durch die mindestens eine Saugmündung (14) des Fluidkörpers (12); und
- Drücken des Milch/Luft-Gemischs zu der mindestens einen Abgabemündung (16) des Fluidkörpers (12) durch die zwei oder mehr Rotationskörper der Pumpeinheit (18), wobei die fortschreitende Bewegung des Milch/Luft-Gemischs durch die zwei oder mehr Rotationskörper der Pumpeinheit (18) die Homogenisierung und Texturierung der aufgeschäumten Milch bewirkt;
wobei das Verfahren **dadurch gekennzeichnet ist, dass** es einen Erhitzungsschritt des in dem Fluidkörper (12) enthaltenen Milch/Luft-Gemischs mittels der mindestens einen Erhitzervorrichtung (24) umfasst.

16. Verfahren nach Anspruch 15, das weiter einen Schritt zum Variieren der Rotationsgeschwindigkeit der zwei oder mehr Rotationskörper der Pumpeinheit (18) umfasst, derart, dass die Strömung des Milch/Luft-Gemischs sowie die Kontaktzeit und der Betrag der zwischen dem Milch/Luft-Gemisch und der Erhitzervorrichtung (24) ausgetauschten Wärme variiert wird.

17. Verfahren nach Anspruch 16, das weiter einen Schritt zum Variieren der Luftmenge, die durch die Saugmündung (14) gesaugt wird, die mittels des Variierens der Drehzahl der zwei oder mehr Rotationskörper der Pumpeinheit (18) erhalten wird, derart umfasst, dass der Betrag der Emulsion von aufgeschäumter Milch variiert wird.

18. Verfahren nach einem der Ansprüche 15 bis 17, das weiter einen Schritt zum Auswählen und Regeln des Temperaturwerts des in dem Fluidkörper (12) enthaltenen Milch/Luft-Gemischs umfasst.

## Revendications

1. Pompe à émulsion (10) comprenant :
- un corps fluidique (12) sur lequel au moins une embouchure d'aspiration (14) pour un fluide à pomper et au moins une embouchure de distribution (16) pour le fluide pompé sont obtenues ;
- une unité de pompage (18) logée à l'intérieur du corps fluidique (12) entre l'embouchure d'aspiration (14) et l'embouchure de distribution (16), ladite unité de pompage (18) étant du type volumétrique rotatif et étant pourvue de deux corps rotatifs ou plus ayant un profil hélicoïdal, agencés pour traiter le fluide dans les espaces laissés libres parmi lesdits corps rotatifs et pour envoyer ledit fluide, dans une ou plusieurs chambres distinctes et avec un écoulement parallèle à l'axe des corps rotatifs, vers l'embouchure de distribution (16) ; et
- un moteur (20) raccordé de façon fonctionnelle auxdits deux corps rotatifs ou plus de l'unité de pompage (18) au moyen de l'interposition d'un couplage de transmission de mouvement (22),
dans laquelle
le corps fluidique (12) de la pompe à émulsion (10) est pourvu d'au moins un dispositif de chauffage alimenté électriquement (24), ledit dispositif de chauffage (24) étant agencé pour chauffer le fluide traité par la pompe à émulsion (10) de manière à ce que le fluide pompé, à sa sortie de l'embouchure de distribution (16), ait une température supérieure à la température du fluide à pomper, à son entrée dans l'embouchure d'aspiration (14).

2. Pompe à émulsion (10) selon la revendication 1, **caractérisée en ce que** lesdits deux corps rotatifs ou plus de l'unité de pompage (18) se composent de vis sans fin respectives avec des bobines opposées, disposées en rotation le long d'axes parallèles l'un à l'autre.

3. Pompe à émulsion (10) selon la revendication 1 ou revendication 2, **caractérisée en ce que** le corps fluidique (12) est fabriqué à partir d'un matériau métallique, et **en ce que** le dispositif de chauffage (24) est enfoui dans le matériau métallique à partir duquel est réalisé ledit corps fluidique (12).

4. Pompe à émulsion (10) selon la revendication 1 ou la revendication 2, **caractérisée en ce que** le corps fluidique (12) est fabriqué à partir d'un matériau métallique, et **en ce que** le dispositif de chauffage (24) est réalisé d'un seul tenant avec l'extérieur dudit corps fluidique (12).

5. Pompe à émulsion (10) selon n'importe lesquelles des revendications 1 à 3, **caractérisée en ce que** le dispositif de chauffage (24) est sélectionné dans le groupe composé :
- d'une ou de plusieurs bougies de préchauffage ;
- d'un ou de plusieurs réchauffeurs à induction avec bobine ;
- d'un ou de plusieurs éléments de chauffage à film épais.

6. Pompe à émulsion (10) selon la revendication 2, **caractérisée en ce que** lesdites deux vis sans fin ou plus de l'unité de pompage (18) sont fabriquées à partir d'un matériau métallique, et **en ce que** le dispositif de chauffage (24) est réalisé d'un seul tenant avec lesdites deux vis sans fin ou plus de l'unité de pompage (18).

7. Pompe à émulsion (10) selon la revendication 6, **caractérisée en ce que** le corps fluidique (12) est fabriqué à partir d'un matériau polymère.

8. Pompe à émulsion (10) selon la revendication 2, **caractérisée en ce que** le corps fluidique (12) et/ou lesdites deux vis sans fin ou plus de l'unité de pompage (18) sont fabriquées à partir d'un matériau plastique thermoconducteur ou électroconducteur.

9. Pompe à émulsion (10) selon la revendication 2, **caractérisée en ce que** le corps fluidique (12) et/ou lesdites deux vis sans fin ou plus de l'unité de pompage (18) sont fabriquées à partir d'un matériau céramique.

10. Pompe à émulsion (10) selon la revendication 2, **caractérisée en ce que** le corps fluidique (12) et/ou lesdites deux vis sans fin ou plus de l'unité de pompage (18) sont fabriquées à partir de n'importe quel matériau compatible avec un chauffage par micro-ondes ou par induction.

11. Pompe à émulsion (10) selon une quelconque des revendications 1 à 10, **caractérisée** ce qu'elle comprend un dispositif de commande électronique configuré pour activer et désactiver le dispositif de chauffage (24) et pour sélectionner électroniquement la valeur souhaitée de température du fluide pompé à sa sortie de l'embouchure de distribution (16).

12. Pompe à émulsion (10) selon la revendication 11, **caractérisée en ce qu'**elle comprend au moins une sonde de température (26), raccordée de façon fonctionnelle audit dispositif de commande électronique et agencée pour effectuer une commande sur la température sélectionnée au moyen dudit dispositif de commande électronique.

13. Pompe à émulsion (10) selon la revendication 12, **caractérisée en ce que** la sonde de température (26) est positionnée au niveau de l'embouchure de distribution (16) .

14. Pompe à émulsion (10) selon l'une quelconque des revendications 1 à 13, **caractérisée en ce que** le corps fluidique (12) est pourvu de deux embouchures d'aspiration (14) distinctes, toutes deux placées dans l'étage d'aspiration dudit corps fluidique (12), une première embouchure d'aspiration (14) étant agencée exclusivement pour l'entrée d'un premier fluide dans le corps fluidique (12), tandis que la deuxième embouchure d'aspiration (14) est agencée exclusivement pour l'entrée d'un deuxième fluide, différent dudit premier fluide, dans le corps fluidique (12).

15. Procédé pour chauffer et faire mousser du lait au moyen d'une pompe à émulsion (10) selon l'une quelconque des revendications 1 à 14, le procédé comprenant les étapes consistant à
- introduire un mélange composé de lait et d'air à travers ladite au moins une embouchure d'aspiration (14) du corps fluidique (12) ; et
- pousser le mélange lait/air vers ladite au moins une embouchure de distribution (16) du corps fluidique (12) à travers lesdits deux corps rotatifs ou plus de l'unité de pompage (18), le déplacement progressif du mélange lait/air à travers lesdits deux corps rotatifs ou plus de l'unité de pompage (18) provoquant l'homogénéisation et la texturisation du lait mousseux ;
le procédé étant **caractérisé en ce qu'**il comprend une étape consistant à chauffer le mélange lait/air contenu dans le corps fluidique (12) au moyen dudit au moins un dispositif de chauffage (24).

16. Procédé selon la revendication 15, comprenant en outre une étape consistant à faire varier la vitesse de rotation desdits deux corps rotatifs ou plus de l'unité de pompage (18) de manière à faire varier l'écoulement du mélange lait/air, ainsi que le temps de contact et la quantité de chaleur échangée entre ledit mélange lait/air et le dispositif de chauffage (24).

17. Procédé selon la revendication 16, comprenant en outre une étape consistant à faire varier la quantité d'air qui est aspirée à travers l'embouchure d'aspiration (14), obtenue au moyen de la variation de la vitesse de rotation desdits deux corps rotatifs ou plus de l'unité de pompage (18) de manière à faire varier la quantité d'émulsion de lait mousseux.

18. Procédé selon l'une quelconque des revendications 15 à 17, comprenant en outre une étape consistant à sélectionner et à commander la valeur de température du mélange lait/air contenu dans le corps fluidique (12).
